# FASCICULE DE BREVET EUROPEEN

(11) **EP 0 836 932 B1**
(45) Date de publication et mention de la délivrance du brevet: **23.04.2003**
(21) Numéro de dépôt: 97402451.5
(22) Date de dépôt: 17.10.1997
(51) Int. Cl.: B32B 17/10, C03C 27/12

(54) **Vitrage à système thermiquement, électriquement et/ou électrochimiquement actif**
Verglazung mit einer activen thermische, elektrische und/oder elektrochemische Einheit
Glazing with a thermally, electrically and/or electrochemically active system

(30) Priorité: 17.10.1996 FR 9612655; 19.12.1996 FR 9615631
(43) Date de publication de la demande: 22.04.1998
(73) Titulaire: SAINT-GOBAIN GLASS FRANCE, 92400 Courbevoie (FR); NORTON PERFORMANCE PLASTICS S.A., 4650 Chaineux (BE)
(72) Inventeur: Ladang, Michel, 4651 Herve (BE); Petit, Dominique, 4671 Blegny (BE); Padoy, Christian, 95500 Gonesse (FR)
(74) Mandataire: Renous Chan, Véronique

(56) Documents cités:
- WO-A-96/31445
- FR-A- 2 691 550
- US-A- 5 302 648
- PATENT ABSTRACTS OF JAPAN vol. 015, no. 133 (C-0820), 2 avril 1991 & JP 03 017158 A (TOSHIBA SILICONE CO LTD), 25 janvier 1991,
- KROSCHWITZ JACQUELINE: "CONCISE ENCYCLOPEDIA OF POLYMER SCIENCE AND ENGINEERING", 1990, A WILEY-INTERSCIENCE PUBLICATION - JOHN WILEY & SONS, NEW YORK - CHICHESTER - BRISBANE - TORONTO - SINGAPORE
- KROSCHWITZ JACQUELINE: "ENCYCLOPEDIA OF POLYMER SCIENCE AND ENGINEERING", 1987, A WILEY-INTERSCIENCE PUBLICATION - JOHN WILEY & SONS, NEW YORK - CHICHESTER - BRISBANE - TORONTO - SINGAPORE

## Description

L'invention concerne les éléments, notamment les vitrages qui comportent des systèmes thermiquement, électriquement et/ou électrochimiquement actifs. Sous ce terme, on comprend les systèmes comprenant un matériau ou une pluralité de matériaux, notamment sous forme d'une couche ou d'un empilement de couches, présentant des propriétés de conduction électrique, ionique et/ou étant le siège de réaction réversible électrochimique sous l'action d'un champ électrique et/ou se modifiant sous l'action de la chaleur du type thermochrome.

Il peut ainsi s'agir de vitrages chauffants, avec un système comportant des couches conductrices électriquement (ou des réseaux de fils conducteurs), de vitrages à transmission/absorption lumineuse et/ou énergétique variable tels que les vitrages à système électrochrome, ou encore de vitrages à diffusion lumineuse variable tels que les vitrages à système à valve optique du type système à suspension de particules ou à cristaux liquides.

Tous ces systèmes, que l'on désignera par la suite par systèmes « actifs », ont en commun le fait qu'ils nécessitent des moyens de connexion électrique à une source de courant extérieure qui doivent être conçus de façon à éviter tout problème de court-circuit, et/ou le fait qu'ils peuvent à plus ou moins grande échelle, être sensibles aux agressions mécaniques ou chimiques extérieures. C'est la raison pour laquelle, pour préserver leur bon fonctionnement, ces systèmes actifs sont usuellement disposés contre au moins un substrat porteur protecteur. En général, ils sont disposés entre deux substrats protecteurs rigides, par exemple en verre, soit par contact direct, soit par l'intermédiaire d'une feuille de polymère d'assemblage. On prévoit alors en outre des moyens d'étanchéification pour isoler les systèmes actifs de l'extérieur. Usuellement, ils se présentent sous la forme de joints polymères périphériques, qui font barrière notamment vis-à-vis de l'eau. Il est ainsi connu d'avoir recours à des joints en caoutchouc butyl et/ou en polysulfure, silicone ou polyuréthane.

Il est ainsi connu du brevet EP-0 575 207 un vitrage électrochrome qui, pour protéger le système contenant les couches à propriétés électrochromes, utilise un double joint périphérique, dont un premier joint à base de caoutchouc butyl en contact avec le système électrochrome et qui fait office, notamment, de barrière d'étanchéité vis-à-vis de la vapeur d'eau, que l'on double d'un joint du type silicone, polysulfure ou polyuréthane assurant quant à lui l'étanchéité vis-à-vis de l'eau liquide.

Les systèmes électrochromes du type de ceux décrits dans le brevet précité sont constitués de deux couches électroconductrices déposées sur chacun des substrats en verre, entre lesquelles se trouve le matériau électrochrome cathodique du type WO₃, l'électrolyte puis éventuellement une seconde couche de matériau électrochrome anodique du type oxyde d'iridium.

Dans les systèmes à cristaux liquides, on a la même configuration de couche « active », ici une unique couche de polymère avec une dispersion de micro-gouttelettes contenant des cristaux liquides, qui se trouve disposée entre deux couches électroconductrices. Dans les systèmes à particules suspendues, on a une suspension de particules aciculaires, éventuellement dichroïques, elle-même dispersée au coeur de gouttelettes dans une matrice polymère entre deux couches électroconductrices.

Il faut donc, dans ces différents cas, éviter toute liaison électrique directe accidentelle entre les deux couches électroconductrices. Le brevet pré-cité EP-0 575 207 a proposé non seulement un double joint isolant le système de l'extérieur, mais en plus des moyens pour s'assurer qu'aucun courant ne puisse passer « via » le joint d'une couche conductrice à l'autre.

Pour ce faire, il propose deux solutions alternatives ou cumulatives : les couches électroconductrices sont connectées à une source de courant électrique, en procédant par exemple comme indiqué dans les brevets EP-408 427, EP-475 847, EP-683 419, EP-718 667 ; à l'aide de bandes d'amenées de courant déposées par sérigraphie à leur surface sur deux de leurs bords opposés. Toutes les parties sérigraphiées susceptibles de se retrouver en contact avec le ou les joint(s) d'étanchéité sont conçues de façon à être préalablement recouvertes d'un émail isolant électrique. En outre, les couches électroconductrices elles-mêmes sont déposées sur leurs substrats respectifs de façon « margée », c'est-à-dire que chacune des couches « s'arrête » à par exemple au moins 1 cm du bord du substrat sur l'un de ses côtés, de façon à ce que, une fois l'assemblage des deux substrats en opposition étant effectué, la bande d'amenée de courant déposée par sérigraphie sur le bord marginal d'une des couches électroconductrices ne soit pas en regard de la couche électroconductrice déposée sur l'autre substrat.

Même en prenant l'ensemble de ces précautions, il a été constaté que certains de ces vitrages pouvaient présenter des vieillissements prématurés, et cela plus particulièrement quand les vitrages étaient utilisés dans une configuration pouvant les solliciter fortement thermiquement. C'est par exemple le cas des vitrages électrochromes qui, à l'état coloré, ont une très faible transmission lumineuse, et qui sont susceptibles de s'échauffer par absorption quand ils sont directement et de manière prolongée soumis aux rayonnements solaires. On peut penser, notamment, aux vitrages électrochromes utilisés en tant que toit-auto, en incidence normale par rapport au soleil.

De manière plus générale, les systèmes « actifs » tels que définis précédemment ont une durabilité dans le temps parfois insuffisante, sans que l'on ait pu toujours en identifier les raisons, ou tout au moins une durée de vie dont on a du mal à maîtriser la reproductibilité.

Le but de l'invention est alors de remédier à ces inconvénients, notamment en trouvant des moyens pour maîtriser la durabilité de tels vitrages à systèmes « actifs », en vue de l'améliorer et/ou de mieux contrôler sa reproductibilité, notamment des moyens ne remettant pas en cause les modes de fabrication actuels de ces vitrages, et de préférence qui puissent tendre à les simplifier.

L'objet de l'invention est un vitrage comprenant au moins deux substrats rigides ou semi-rigides transparents sur lequel ou entre lesquels est disposé au moins un système thermiquement, électriquement et/ou électrochimiquement actif, qui est muni d'au moins un joint d'étanchéité en contact avec au moins un des matériaux électriquement ou électrochimiquement actifs du système. Ce joint contient une matrice polymère à base d'élastomère(s) choisi(s) parmi l'éthylène-propylène, l'éthylène-vinylacétate (EVA), l'éthylène-vinylbutyrate (EVB), le polypropylène, le polyéthylène, l'éthylène-propylène butène, le polyméthyl-pentène. Ce joint, selon notamment le type de système actif envisagé, présente deux caractéristiques techniques alternatives ou cumulatives : il présente une conductivité électrique inférieure à au moins 10⁻⁴ohm⁻¹.cm⁻¹, notamment inférieure à 10⁻⁵ohm⁻¹.cm⁻¹, et même inférieure à 10⁻⁷ohm⁻¹.cm⁻¹ ou 10⁻⁹ohm⁻¹.cm⁻¹, et/ou il contient des composés essentiellement dépourvus d'espèces ou de fonctions chimiques susceptibles de diffuser hors du joint, et, soit de réagir chimiquement ou électrochimiquement avec l'un au moins des matériaux actifs du système dans sa plage de tension et/ou de température de fonctionnement, soit de « polluer » l'un de ceux-ci.

On comprend par « substrats rigides ou semi-rigides » des substrats qui peuvent être notamment à base de verre ou de polymère(s) du type polyéthylène téréphtalate PET, polyméthylméthacrylate PMMA ou polycarbonate PC.

On comprend par « polluer », l'action qui n'implique pas nécessairement de réaction, de modification chimique de l'un ou l'autre des constituants du système, mais qui détériore son mode de fonctionnement.

Les réactions chimiques, électrochimiques ou ces pollutions peuvent être « directes » ou « indirectes », en ce sens que les composés qui les provoquent sont issus du joint directement, ou alors sont en fait des sous-produits des composés issus du joint, qui agissent alors « indirectement ».

On inclut dans l'invention les vitrages actifs où le système actif constitué d'un empilement de couches différentes est associé à au moins un substrat rigide ou semi-rigide directement. C'est par exemple le cas des vitrages électrochromes où l'on a la structure usuelle verre/système actif ou verre/système actif/verre. Mais l'invention comprend également les systèmes actifs associés ou destinés à être associés à au moins un substrat rigide ou semi-rigide par l'intermédiaire d'au moins une feuille d'un matériau à base de polymère. On inclut ainsi, par exemple, les systèmes à cristaux liquides où l'on a fréquemment la structure verre/polymère(s)/système actif/polymère(s)/verre. Pour le produit actuellement vendu par SAINT-GOBAIN VITRAGE sous l'appellation « Priva-Lite », on a ainsi la structure verre/PVB/PET/système à cristaux liquides/PET/PVB/verre, le film (PET/système à cristaux liquides/PET) étant feuilleté aux verres par les deux feuilles thermoplastiques de PVB, le polymère PET (polyéthylène-téréphtalate) étant un polymère souple. (Les feuilles de PVB peuvent être remplacées par des feuilles de polyuréthane).

On comprend, au sens de l'invention, par « matériaux électriquement ou électrochimiquement actifs » non seulement les matériaux inclus dans le système mais également tous les matériaux qui permettent, notamment, de l'alimenter en électricité, et notamment tous ceux désignés habituellement par le terme d'éléments de connectique (bandes d'amenées de courants, clinquants.

On comprend par « thermiquement » actifs, les matériaux du type thermochromes qui sont susceptibles de se modifier réversiblement au-delà d'une certaine température, notamment par un changement de phase réversible les rendant opaques/réfléchissants à température élevée. On pourra se reporter, pour plus de détails, par exemple aux brevets EP-0 639 450 et WO-93/02380.

Les auteurs de l'invention ont en effet étudié les phénomènes de vieillissement des vitrages actifs, plus particulièrement des vitrages électrochromes, phénomènes qui apparaissent parfois de manière prématurée, notamment lorsque les vitrages doivent subir de manière répétée des échauffements jusqu'à plus de 80°C, température que l'on peut effectivement rencontrer quand les vitrages sont maintenus à l'état coloré, donc quand ils sont absorbants, en plein soleil.

Ces vieillissements peuvent consister en l'apparition de bulles visibles à l'oeil nu quand on a recours à un électrolyte sous forme de polymère conducteur ionique, par exemple, et/ou l'apparition d'inhomogénéités de coloration entre les bords et la partie centrale du vitrage.

Il a d'abord été soupçonné que ces défauts provenaient de réactions électrochimiques « parasites » liées à la nature même des matériaux utilisés dans le système. En fait, de manière surprenante, il s'est avéré que l'on parvenait à éliminer l'essentiel de ces défauts sans avoir à modifier radicalement la nature ou la disposition des matériaux entrant dans la composition du système « actif », mais en adaptant et contrôlant seulement la composition chimique et/ou les propriétés électriques du joint d'étanchéité : en choisissant un joint essentiellement isolant sur le plan électrique, on s'assure de l'absence de risque de court-circuit d'une couche électroconductrice à l'autre par le joint. Il a été en effet constaté que les joints habituels, par exemple à base de caoutchouc butyl déjà mentionné, présentaient une certaine conductivité électrique qui, même faible, pourrait justifier à elle seule la nécessité mentionnée précédemment de recouvrir les arrivées de courant d'émail isolant et/ou de « marger » de façon appropriée les couches électroconductrices. Utiliser un joint isolant électriquement permet d'envisager la suppression de ces deux précautions, ce qui est un avantage non négligeable sur le plan industriel, dans la mesure où cela simplifie la fabrication des vitrages et raccourcit leur temps de cycle de production.

Sélectionner la nature chimique du joint de manière à ce qu'il ne comporte pas ou quasiment pas de composés susceptibles de diffuser jusqu'aux matériaux électrochimiquement actifs du système et à réagir à leur contact permet par ailleurs de s'assurer de l'absence de réactions électrochimiques parasites concurrentes de celles que l'on cherche à susciter et venant dégrader les performances du système de manière irréversible.

Le joint selon l'invention est également très avantageux pour les vitrages actifs à cristaux liquides. En effet, il ne contient pas de composés susceptibles de diffuser hors du joint et de « polluer » la couche active. Ici, il ne s'agit pas véritablement d'éviter une détérioration par une réaction parasitaire électrique ou électrochimique, mais il a été observé que si le joint contenait des « impuretés » aptes à diffuser jusqu'au sein des micro-gouttelettes contenant les cristaux liquides, ces impuretés pouvaient rendre isotrope la phase de cristaux liquides, de manière irréversible, bloquant localement le fonctionnement du vitrage.

Un mode de réalisation préféré du joint selon l'invention consiste à le choisir tel qu'il contient, très peu ou pas de particules conductrices et/ou très peu ou pas de fonctions chimiques du type liaison insaturée comme des liaisons C=O, C = N, du type aromatique tel que tous les dérivés du phénol, du type liaison avec du soufre comme les thiols SH.

En fait, ces fonctions réactives résiduelles susceptibles de diffuser peuvent être intrinsèques ou « extrinsèques » au matériau polymère qui est l'élément essentiel du joint, en ce sens qu'elles peuvent appartenir aux chaînes de polymère, ou être contenues dans les différents additifs, impuretés que comprend le joint par ailleurs, provenant par exemple du plasticifiant, de la charge s'il y en a, des résidus de catalyseur de synthèse du polymère.

Selon l'invention, et selon la « sensibilité » du vitrage actif vis-à-vis d'une fonction réactive donnée, il est donc important d'être vigilant quant à la nature du polymère du joint et la formulation de ce dernier : l'invention réside dans le fait de parvenir à avoir un joint dont la formulation chimique est adéquate et maintenue constante, de façon à ce que le vitrage puisse lui-aussi, dans son ensemble, présenter une durée de vie constante, indépendante du joint.

Les vitrages « actifs » au sens de l'invention qui peuvent être avantageusement équipés d' un tel type de joint d'étanchéité sont par exemple les vitrages chauffants avec un système du type réseau de fils conducteurs ou couche conductrice continue, en métal ou en oxyde métallique dopé. Dans ce cas, la propriété la plus importante que doit présenter le joint selon l'invention est son pouvoir isolant électriquement. On utilise ce type de vitrage, notamment en structure feuilletée du type verre/système chauffant/feuille d'assemblage thermoplastique/verre dans des véhicules, en tant que pare-brise par exemple. On se reportera, pour plus de détails, avantageusement aux brevets EP-433 136, EP-353 140 et EP-353 141. Le joint peut alors avantageusement être déposé par une technique d'extrusion adaptée au dépôt de joints pour le montage de vitrages feuilletés, technique notamment décrite dans les brevets EP-121 479, EP-121 480, EP-121 481, EP-620 134.

Il peut aussi s'agir de vitrages actifs du type thermochrome, comme explicité précédemment.

Les vitrages « actifs » au sens de l'invention comprennent également les vitrages à transmission/absorption lumineuse et/ou énergétique variable du type système électrochrome. On en rappelle ci-dessous brièvement le mode de fonctionnement : ceux-ci, de manière connue, comportent une couche d'un matériau électrochrome capable d'insérer réversiblement et simultanément des cations et des électrons et dont les états d'oxydation correspondant aux états insérés et désinsérés sont de coloration distincte, un des états présentant une transmission lumineuse plus élevée que l'autre. La réaction d'insertion ou de désinsertion est commandée par une alimentation électrique adéquate à l'aide d'un générateur de courant ou d'un générateur de tension. Le matériau électrochrome, usuellement à base d'oxyde de tungstène, doit ainsi être mis au contact d'une source d'électrons telle qu'une couche électroconductrice transparente et d'une source de cations telle qu'un électrolyte conducteur ionique.

Par ailleurs, il est connu que pour assurer au moins une centaine de commutations, il doit être associé à la couche de matériau électrochrome une contre-électrode capable elle aussi d'insérer de façon réversible des cations, symétriquement par rapport à la couche de matériau électrochrome, de sorte que, macroscopiquement, l'électrolyte apparaît comme un simple médium des cations.

La contre-électrode doit être constituée ou d'une couche neutre en coloration, ou du moins transparente ou peu colorée quand la couche électrochrome est à l'état décoloré. L'oxyde de tungstène étant un matériau électrochrome cathodique, c'est à dire que son état coloré correspond à l'état le plus réduit, un matériau électrochrome anodique tel que l'oxyde de nickel ou l'oxyde d'iridium est généralement utilisé pour la contre-électrode. Il a également été proposé d'utiliser un matériau optiquement neutre dans les états d'oxydation concernés, comme par exemple l'oxyde de cérium ou des matériaux organiques comme les polymères conducteurs électroniques (polyaniline) ou le bleu de prusse.

On trouvera la description de tels systèmes par exemple dans les brevets européens EP-0 338 876, EP-0 408 427, EP-0 575 207 et EP-0 628 849.

Actuellement, on peut ranger ces systèmes dans deux catégories, selon le type d'électrolyte qu'ils utilisent :
- soit l'électrolyte se présente sous la forme d'un polymère ou d'un gel, par exemple un polymère à conduction protonique tel que ceux décrits dans les brevets européens EP-0 253 713 et EP-0 670 346, ou un polymère à conduction d'ions lithium tels que ceux décrits dans les brevets EP-0 382 623, EP-0 518 754 ou EP-0 532 408,
- soit l'électrolyte est une couche minérale, conducteur ionique mais isolant électroniquement, on parle alors de systèmes électrochromes « tout solide ». Pour la description d'un système électrochrome « tout solide », on pourra se reporter à la demande de brevet française déposée le 27 mars 1996 sous le numéro de dépôt FR-96/03799.

Le joint selon l'invention est particulièrement avantageux pour les vitrages électrochromes où l'électrolyte se présente sous la forme d'un polymère ou d'un gel, dont l'épaisseur est bien supérieure à celle des électrolytes sous forme de couche minérale et dont la nature essentiellement organique les rend plus vulnérables à des dégradations par contact avec des espèces réactives diffusant à partir du joint. Cependant, il est aussi intéressant à utiliser pour des systèmes « tout solide ». Dans une configuration comme dans une autre, il est important que le joint destiné à équiper ces vitrages électrochromes soit dépourvu d'espèces susceptibles de subir des réactions d'oxydo-réduction dans la plage de tension de fonctionnement des vitrages : le joint est avantageusement composé d'espèces dont le potentiel rédox est non inclu dans cette plage de tension.

Comme autre type de vitrage à transmission/absorption lumineuse ou énergétique variable pouvant être équipé du joint selon l'invention, on a également les vitrages dits viologènes, comme ceux décrits dans le brevet US-5 239 406 ou dans le brevet EP-0 612 826.

L'invention s'applique également aux vitrages à systèmes à diffusion et/ou absorption lumineuse variable, notamment du type dit à valve optique : il s'agit d'un film comprenant une matrice de polymère généralement réticulé dans laquelle sont dispersées des micro-gouttelettes contenant des particules qui présentent la propriété de se placer selon une direction privilégiée sous l'action d'un champ électrique ou magnétique.

En fonction notamment du potentiel appliqué aux bornes des couches conductrices placées de part et d'autre du film, et de la concentration et de la nature des particules orientables, le film présente des propriétés optiques variables. Ainsi, il est connu du brevet WO-93/09460 une valve optique à base d'un film comprenant une matrice en polyorganosilane réticulable et des particules orientables minérales ou organiques, plus particulièrement des particules absorbant la lumière telles que des particules de polyiodure. Quand le film est mis sous tension, les particules chimiques interceptent beaucoup moins la lumière que lorsqu'il est hors tension.

Comme vitrage à diffusion lumineuse optique, on comprend également les vitrages à cristaux liquides. Ils sont basés sur l'utilisation d'un film placé entre deux couches conductrices et à base d'une matière polymère dans laquelle sont dispersées de gouttelettes de cristaux liquides, notamment nématiques à anisotropie diélectrique positive. Les cristaux liquides, quand le film est mis sous tension, s'orientent selon un axe privilégié, ce qui autorise la vision. Hors tension, en l'absence d'alignement des cristaux, le film devient diffusant et empêche la vision.

Des exemples de tels films sont décrits notamment dans les brevets européens EP-0 238 164, et américains US-4 435 047, US-4 806 922, US-4 732 456. Ce type de film, une fois feuilleté et incorporé entre deux substrats en verre, est commercialisé par la société SAINT-GOBAIN VITRAGE sous la dénomination commerciale « Priva-Lite ».

On peut en fait utiliser tous les dispositifs à cristaux liquides connus sous les termes de cristaux « NCAP » (Nematic Curvilinearly Aligned Phase) ou « PDLC » (Polymer Dispersed Liquid Cristal).

On peut également utiliser, par exemple, les gels à base de cristaux liquides cholestériques ou nématiques, comme ceux décrits dans le brevet WO-92/19695, ou encore des polymères à cristaux liquides.

L'invention s'applique également à des systèmes actifs du type système photovoltaïque, qui se présentent le plus fréquemment sous la forme de deux substrats rigides du type verre entre lesquels est disposé un empilement comprenant une couche de TiO₂ à propriétés photocatalytiques, une couche d'électrolyte, une couche électroconductrice.

Le joint selon l'invention comprend une matrice polymère à base de polymère thermodurcissable ou thermoplastique. Il peut être réticulé partiellement ou totalement, notamment à l'aide d'agents réticulants du type isocyanate ou époxyde. Il s'agit d'un polymère à base d'élastomère(s). Ce dernier type de polymère est en effet intéressant en ce sens qu'il présente des températures de transmission vitreuse nettement inférieures à la température ordinaire d'utilisation, que ses caractéristiques autorisent son incorporation dans le vitrage actif par des techniques automatisées bien maîtrisées comme la technique d'extrusion déjà mentionnée, et qu'il présente une bonne adhérence à des substrats notamment en verre.

Les élastomères selon l'invention sont choisis parmi les polymères hydrocarbonés essentiellement saturés (polymères hydrocarbonés), de préférence choisis parmi les polymères à base de monooléfines telles que l'éthylène-propylène ou les polyoléfines catalysées par des catalyseurs métallocènes, notamment du type polyéthylène, polypropylène.

Les polyoléfines peuvent aussi être utilisées, du type polyéthylène, copolymère éthylène-propylène, copolymère éthylène-propylène-butène, polyméthyl-pentène, poly-propylène, éthylène-vinylacétate EVA, éthylène-vinylbutyrate EVB.

Il est avantageux de constituer la matrice polymère non pas avec un seul polymère du type élastomère, mais avec une pluralité d'entre eux, et notamment au moins trois, présentant des masses molaires différentes. On les choisit de préférence dans une gamme de masses molaires d'au moins 2.10⁴, par exemple comprise entre 3.10⁴ et 2.10⁶. On peut ainsi faire un mélange de trois polymères au moins, l'un présentant une masse molaire entre 3.10⁴ et 8.10⁴, le second entre 2.10⁵ et 1.10⁶ et le troisième au-dessus de 1.10⁶. L'association de plusieurs élastomères de masses molaires différentes permet d'ajuster précisément les propriétés mécaniques et la viscosité du joint, notamment en fonction de sa mise en oeuvre dans le vitrage: ainsi, quand il est incorporé à un vitrage électrochrome selon le type de procédé exposé dans le brevet EP-B-477 065, c'est-à-dire quand on le dépose à la périphérie d'un des substrats du vitrage destiné à être assemblé à un autre substrat par une technique de calandrage à chaud, le joint servant alors d'espaceur provisoire, il est nécessaire que le joint puisse présenter une bonne tenue mécanique, une rigidité suffisante jusqu'à des températures allant à 80°C, mais que par contre il soit apte à fluer lors du calandrage, c'est-à-dire à des températures de l'ordre de 110°C à 120°C.

La matrice polymère du joint contient également de préférence au moins un agent plastifiant, qui va lui aussi contribuer à ajuster la flexibilité du joint en fonction des besoins. De préférence, le plastifiant est de basse masse molaire, notamment inférieure ou égale à 20.000 ou même à 10.000. Tout comme pour les élastomères précédents, il est préférable qu'il soit dépourvu d'espèces chimiques susceptibles de réagir avec l'un ou l'autre des matériaux du système actif, d'où le choix de polymères préférés à fonctions peu ou pas polaires et saturés, comme des hydrocarbures saturés présentant éventuellement des fonctions ester ou acrylate. La faible polarité, ou la non-polarité du plastifiant est en effet un avantage pour diminuer au maximum toute affinité chimique que pourrait avoir le plastifiant avec les matériaux au moins pour partie organique que peuvent comprendre les systèmes actifs. Ainsi, il est important qu'il soit peu polaire, s'il doit entrer en contact avec des cristaux liquides, hautement polaires, d'un système à cristaux liquides, ou avec un électrolyte à base de polymère conducteur de H⁺ ou Li⁺ du type de ceux utilisés dans les vitrages électrochromes. Ce choix préférentiel d'une polarité contraire, ou au moins significativement différente de celle du matériau organique du système actif peut bien sûr s'appliquer également à tous les autres composés organiques du joint.

Il peut ainsi s'agir de polyisobutylène de faible masse molaire, de dérivés de phtalate comme le di-isodécylphtalate, des dérivés d'adipate, de sébaçate ou de sulfonate, ou encore d'huiles paraffiniques du type huile paraffinique de grande pureté de couleur blanche comme celle commercialisée sous le nom de « Primol » par la compagnie BRITISH PETROLEUM.

La matrice polymère du joint peut aussi contenir un agent collant. On entend par agent collant un composé apte à favoriser l'effet collant de la matrice, et que l'on connaît parfois sous le terme anglais de « tackifier resin ». Notamment, il présente une masse molaire très faible, inférieure ou égale à 10.000, notamment inférieure à 5.000, et comprise entre 2.000 et 500 et/ou un point de ramollissement compris entre 50 et 130°C, notamment entre 90 et 110°C. On le choisit de préférence du type résine aliphatique hydrocarbonée saturée.

Le joint selon l'invention peut également comporter en dispersion dans la matrice polymère au moins une charge, notamment choisie non ou peu conductrice électriquement, de préférence minérale et sous forme de poudre. La présence de charge dans la matrice peut contribuer à lui conférer la tenue mécanique voulue. Elle reste cependant optionnelle, son absence pouvant en quelque sorte être « compensée » par un ajustement de la répartition en élastomères de différentes masses molaires de la matrice, notamment en augmentant la teneur en élastomères de masse molaire élevée.

Comme type de charge, on choisit de préférence des matériaux qui soient isolants sur le plan électrique, par exemple du type oxyde métallique tel que l'oxyde d'aluminium, l'oxyde de magnésium, du type sable comme du sable de silice, du quartz, de la farine de diatomées, de la silice thermique dite aussi de pyrogénation, ou encore de la silice non pyrogénée. Il peut aussi s'agir de silicates tels que le talc, le mica, le kaolin, de microsphères ou billes de verre, ou encore d'autres poudres minérales comme le carbonate de calcium. Par contre, il est préférable d'éviter l'emploi de charges qui soient conductrices électriquement et/ou susceptibles de contenir des impuretés pouvant réagir électrochimiquement avec l'un au moins des matériaux du système actif. Ainsi, les charges de type particules de noir de carbone, pourtant une charge habituellement utilisée pour renforcer les caoutchoucs butyls, sont à éviter, ou tout au moins à choisir de manière appropriée, notamment en ce qui concerne leur origine et la quantité choisie.

En fait, on peut prévoir d'incorporer un certain taux de particules du type noir de carbone, mais un taux limité pour au moins deux raisons : d'une part, les particules sont même faiblement, relativement conductrices électriquement. D'autre part, le mode de synthèse de ce type de particules peut faire qu'elles peuvent contenir un certain taux d'impuretés résiduel qui peuvent s'avérer « actives » chimiquement et donc gênantes dans le cadre de l'invention, par exemple à fonction soufrée et/ou insaturées ou aromatiques. Il est donc souhaitable, si on les utilise, de limiter leur quantité en poids, dans le joint, à au plus 15%, notamment au plus 5 à 10%.

Les charges peuvent également être choisies sous forme de fibres, notamment de fibres minérales de type verre ou roche, soit des fibres du type de celles utilisées dans les matériaux d'isolation, notamment celles commercialisées par la société ISOVER SAINT-GOBAIN, soit des fibres de verre de type textile pouvant jouer le rôle de renfort mécanique, notamment du type de celles commercialisées par la société VETROTEX SAINT-GOBAIN.

On peut également utiliser des charges non minérales, notamment sous forme de billes de polymère par exemple en polyamide, en polyméthacrylate de méthyle PMMA, en lucite.

D'autres additifs peuvent également être ajoutés dans la formulation pour apporter une fonctionnalité supplémentaire. Ainsi, il peut être intéressant d'ajouter, selon les utilisations finales du vitrage, des additifs anti-oxydants. Il est préférable d'éviter d'avoir recours à des anti-oxydants comme le BHT, le bi-ter butyl phénol qui est susceptible de subir des réactions d'oxydo-réduction dans la gamme de tension de fonctionnement usuel des vitrages électrochromes. Il vaut mieux, par exemple, avoir recours à d'autres types d'agents anti-oxydants dont le potentiel rédox n'est pas inclu dans la plage de tension de fonctionnement des vitrages électrochromes. Il peut s'agir, plus particulièrement, d'amines à encombrement stérique ou de triphénylphosphine TPP.

Selon une variante préférée de l'invention, le joint peut ainsi avoir une formulation comprenant, en pourcentages pondéraux, 20 à 90% d'élastomère(s), 15 à 30% d'agent(s) plastifiant(s), 0 à 25% d'agent(s) collant(s), et 0 à 30% de charge(s).

On peut par ailleurs prévoir de réticuler la matrice polymère du joint, par exemple avec un agent de réticulation du type isocyanate et/ou époxyde. Il est alors préférable d'ajuster la quantité d'agent(s) de réticulation de manière à s'assurer de sa (leur) totale conversion au sein du polymère, car il s'agit de composés réactifs chimiquement.

De même, il est préférable de fabriquer la matrice polymère de façon à ce qu'elle ait un taux résiduel le plus proche de 0% en poids en monomères de départ, toujours afin d'éviter que le joint, une fois sa fabrication achevée, n'ait en quantité significative des composés de faible masse aptes à diffuser et très réactifs chimiquement.

Avantageusement, si cela s'avère nécessaire, on peut associer au joint précédemment décrit au moins un autre joint « complémentaire » en ce sens qu'il complète sa fonction d'étanchéité, notamment vis-à-vis de l'eau liquide. Il peut ainsi s'agir d'un second joint de type polysulfure, polyuréthane ou silicone, que l'on peut poser contre le premier joint par enduction de ce dernier, de manière connue, ou par une co-extrusion et/ou extrusions simultanées des deux joints.

L'invention s'applique notamment à un vitrage comportant une structure feuilletée comprenant trois substrats rigides du type verre, avec entre le premier et le second substrat une feuille d'intercalaire d'assemblage en polymère thermoplastique du type polyvinylbutyral PVB ou copolymère d'éthylène et d'acétate de vinyle EVA ou encore de certains polyuréthanes, et entre le second et le troisième substrat un système électrochrome, les dimensions relatives des trois substrats étant telles que le vitrage présente une gorge périphérique dans laquelle est (sont) disposé(s) le(s) joint(s) d'étanchéité, de manière affleurante ou débordante par rapport aux chants du vitrage.

La structure feuilletée peut ensuite être montée en vitrage isolant multiple, notamment en double-vitrage par association avec un autre substrat rigide par l'intermédiaire d'une lame de gaz intercalaire.

L'invention peut également consister à monter le vitrage actif en vitrage feuilleté « asymétrique », où l'un des deux substrats rigides entourant le système actif type électrochrome, est muni, sur sa face tournée vers l'extérieur d'au moins une feuille de polymère à propriétés d'absorbeur d'énergie éventuellement associée à une seconde feuille de polymère à propriétés « auto-cicatrisantes », les polymères choisis étant le plus souvent à base de polyuréthane. Pour plus de détails sur ce type de structure, on se reportera, par exemple, aux brevets EP-132 198, EP-131 523, EP-389 354.

Comme mentionné précédemment, le joint selon l'invention est de préférence mis en oeuvre dans le vitrage actif par une technique d'extrusion, qui présente l'avantage de ne pas nécessiter d'étape préalable de préformage et d'autoriser un dépôt du joint en continu.

L'invention a également pour objet le joint lui-même, tel que défini précédemment.

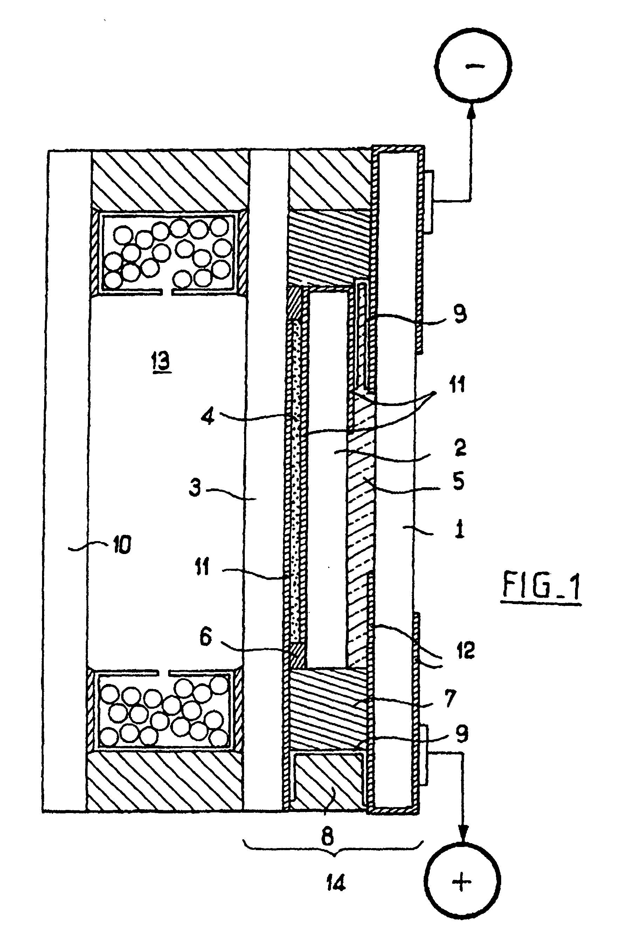

D'autres détails et caractéristiques avantageux de l'invention ressortent de la description ci-après d'un mode de réalisation préféré non limitatif, en référence au dessin annexé qui représente :
- en figure 1, un vitrage électrochrome feuilleté et monté en double-vitrage.

Avant de décrire le vitrage électrochrome et la configuration du joint assurant l'étanchéité de l'empilement de couches du système électrochrome, on décrit tout d'abord la formulation de trois joints non conformes à l'invention. On précise que l'opération de mélange des différents constituants des joints s'effectue dans un mélangeur standard à bras en Z, à chaud de manière à abaisser la viscosité des constituants et favoriser l'homogénéisation du mélange.

Les constituants de base de joints ci-après exemplifiés sont les suivants (on précise que les « masses molaires » sont à comprendre comme la moyenne viscométrique du poids moléculaire, déterminée à partir de la viscosité du polymère dans de l'iso-octane à 20°C. Pour la mesure est utilisé un viscosimètre Ubbelohde avec capillaire n°1) :
A- les polymères élastomères à masse molaire variable :
   A1: un polyisobutylène de masse molaire 1,3 à 1,8.10⁶, commercialisé sous la dénomination Oppanol 120 par la société BASF.
   A2 : un polyisobutylène de masse molaire de 0,62 à 0,96.10⁶ commercialisé sous la dénomination Oppanol 80 par la société BASF.
   A3 : un polyisobutylène de masse molaire 85.000 commercialisé sous la dénomination Oppanol 15 par la société BASF.
   A4 : un polyisobutylène de masse molaire 40.000 commercialisé sous la dénomination Oppanol 10 par la société BASF.
B- un agent plastifiant, qui est ici un polyisobutylène de masse molaire 2.600 commercialisé sous la dénomination Hyvis 200 par la société TECHNIGRAM.
C- un agent collant, qui est une résine aliphatique hydrocarbonée hydrogénée, c'est à dire saturée, de point de ramollissement compris entre 96 et 104°C commercialisée sous la dénomination Escorez 1304 par la société EXXON CHEMICAL.
D- une charge minérale sous forme d'une poudre de kaolin.

Le tableau 1 ci-dessous indique pour ces trois joints numérotés de 1 à 3, leur formulation, en précisant les teneurs en pourcentages pondéraux des différents constituants listés plus haut :

**TABLEAU 1**

| | **Joint n°1** | **joint n°2** | **joint n°3** |
|---|---|---|---|
| A1 | - | 20 | - |
| A2 | 22,9 | 10 | 11,8 |
| A3 | 15,2 | 20 | 11,8 |
| A4 | 22,9 | 30 | 5,9 |
| B | 15,2 | 20 | 11,8 |
| C | 19,1 | - | 17,6 |
| D | 4,7 | - | 41,7 |

Ces trois types de joint ont ensuite été soumis à un test destiné à évaluer leurs propriétés mécaniques à différentes températures. Il consiste à mesurer leurs modules élastiques G*, G' et de perte G" à deux températures, l'une vers 80°C pour laquelle ces modules doivent être assez élevés pour éviter le fluage (lorsque le vitrage actif est posé), l'autre vers 130°C pour laquelle ces modules doivent être suffisamment faibles pour autoriser la mise en oeuvre et le fluage recherché du joint pendant la fabrication du vitrage.

Le mode opératoire de ce test est le suivant : les modules sont mesurés en torsion sur un disque de 10 mm de diamètre découpé à partir d'un film de 1 mm d'épaisseur obtenu en pressant la matière à 120°C. L'échantillon est testé avec un Rhéomètre en plaçant un échantillon entre 2 plateaux parallèles de 5 mm de rayon et une force normale constante de 0.2 N est appliquée sur le plateau supérieur.

Une déformation sinusoïdale (γ) est imposée au plateau supérieur avec une fréquence de 1Hz, et la contrainte sinusoïdale (τ) nécessaire ainsi que l'angle de déphasage entre la contrainte et la déformation (ϕ) sont enregistrés pendant le chauffage de l'échantillon de 33°C à 180°C avec un gradient de 5°C/min.

Les différents modules sont obtenus de la façon suivante
G* = τ/γ
G' = G*. cosϕ
G" = G*.sinϕ

Le tableau 2 ci-dessous regroupe pour chacun des joints, les valeurs de G* en pascals associées à l'angle de déphasage en degrés, à 80 et 120°C :

**TABLEAU 2**

| | | | | |
|---|---|---|---|---|
| | T = 80°C | | T = 120°C | |

| | G* | ϕ | G* | ϕ |
|---|---|---|---|---|
| Joint n° 1 | 3,3.10⁴ | 29,8 | 2,3.10⁴ | 31,1 |
| Joint n° 2 | 3,9.10⁴ | 25,9 | 2,6.10⁴ | 26,8 |
| Joint n° 3 | 7,8.10⁴ | 33,6 | 5,3.10⁴ | 36,4 |

Le tableau 3 ci-dessous regroupe, pour le joint n° 3, les valeurs de G' et G " associées à leur angle de déphasage, toujours à 80 et 120°C :

**TABLEAU 3**

| | T = 80°C | | | | T = 120°C | | | |
|---|---|---|---|---|---|---|---|---|
| | G' | ϕ | G" | ϕ | G' | ϕ | G" | ϕ |
| Joint n°3 | 6,38.10⁴ | 32,99 | 4,14.10⁴ | 32,99 | 4,30.10⁴ | 35,47 | 3,07.10⁴ | 35,47 |

Les valeurs rassemblées dans les tableaux 2 et 3 permettent de vérifier la compatibilité de la formulation de ces trois joints avec leur application visée : ils sont suffisamment ductiles à 120°C et suffisamment rigides à 80°C.

Ces trois joints ont été utilisés avec succès dans des structures de vitrages électrochromes feuilletés dont seules les caractéristiques intéressant l'invention seront reprises ici. Pour plus de détails, on se reportera par exemple au brevet EP-0 575 207 précité.

On a par ailleurs mesuré la conductivité électrique σ de trois types de joints :
□ **1- le joint n° 3** dont la formulation est indiquée au tableau 1,
□ **2- le joint n° 3bis** dont la formulation est identique au joint n°3, mais qui comprend en outre 5% en poids de particules de noir de carbone référencées STATEX N550 et fournies par la société Colombian (les teneurs en pourcentages pondéraux des autres constituants étant adaptées en conséquence),
□ **3- le joint n° 3ter** dont la formulation est identique au joint n° 3, mais qui comprend en outre 10% en poids de particules de noir de carbone identiques à celles utilisées dans le joint n° 3bis (les teneurs en pourcentages pondéraux des autres constituants étant là aussi à adapter en conséquence).

Les résultats sont indiqués dans le tableau 4 ci-dessous :

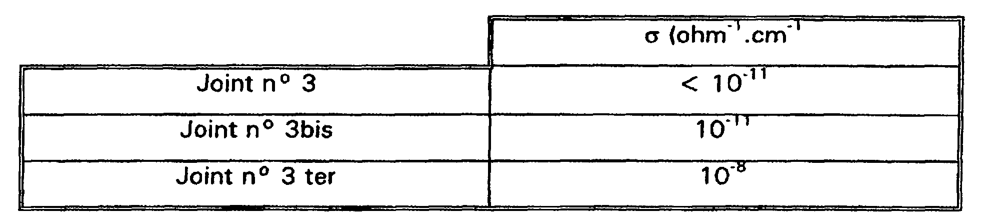

La conductivité du joint n° 3 est trop faible pour pouvoir être évaluée précisément.

On voit de ces résultats que même un taux non négligeable de 10% en poids de particules relativement conductrices électriquement conduit à un joint qui reste globalement très peu conducteur : si les applications de joint l'exigent, on peut obtenir un joint extrêmement isolant électriquement en utilisant aucune charge conductrice. Si un tel niveau d'isolation n'est pas requis, on peut donc ajouter un certain taux de particules conductrices du type noir de carbone qui, par ailleurs, sont intéressantes en tant que renfort mécanique.

Une autre série de trois joints a été fabriquée :
□ **Joint n° 4** : (conforme à l'invention)
   Il comprend :
   - 2 types de polymères :
      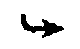 280 g d'un copolymère éthylène/propylène commercialisé par Eastman Chemicals sous l'appellation « Eastoflex E1003 »,
      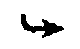 420 g de caoutchouc butyl à taux résiduel de fonctions insaturées de 2% en poids, commercialisé par Eastman Chemicals sous l'appellation « Kalar 5214 butyl rubber »;
   - 500 g de charge minérale sous forme de carbonate de sodium,
   - 700 g d'un agent collant commercialisé par Eastman Chemicals sous l'appellation « Eastotac H-130L »,
   - 100 g d'un agent plastifiant en polyisobutylène à bas poids moléculaire, commercialisé par Eastman Chemicals sous l'appellation « Indopol H-1900 ».
□ **Joint n° 5** : (non conforme à l'invention)
   Il comprend :
   - comme polymères :
      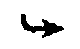 420 g de caoutchouc butyl du joint n° 4,
      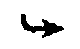 280 g de polyisobutylène commercialisé par Eastman Chemicals sous l'appellation « Vistanex LM-MS »,
   - 500 g de charge sous forme de carbonate de calcium,
   - 700 g de l'agent collant du joint n° 4,
   - 100 g de l'agent plastifiant du joint n° 4.
□ **Joint n° 6** : (conforme à l'invention) II comprend, en pourcentage pondéraux :
   - un ensemble de polymères :
      ⇒ 38% d'un copolymère éthylène-propylène-butène commercialisé par Huis sous l'appellation « Vestoplast 703 »,
      ⇒ 15% d'un copolymère de même type commercialisé sous l'appellation « Vestoplast 750 »,
      ⇒ 1,5% d'un copolymère tri-séquence styrène/éthylène-butylène/styrène commercialisé par Huls sous l'appellation « Kraton G1657 »,
      ⇒ 30% de polyisobutylène commercialisé sous l'appellation « Oppanol B15 »,
      ⇒ 7,5% de caoutchouc butyl à taux résiduel de fonctions insaturées d'au plus 2 ou 3% en poids, commercialisé par Huls sous l'appellation « Butyl rubber PB 402-24 »,
   - 7,5% en poids d'un agent collant commercialisé par Huls sous l'appellation « Beuilite 62-107 »,
   - 1% en poids de charge sous forme de noir de carbone commercialisé sous l'appellation « Carbon Black Printex 60 ».

Ces trois joints sont isolants électriquement, et ils permettent de vérifier que l'on peut utiliser, au moins pour partie, un polymère de type caoutchouc butyl présentant cependant un certain taux de fonctions insaturées : si le taux reste globalement, par exemple inférieur à 5 à 10% en poids du joint, cela ne pose a priori pas de problème de réactivité chimique néfaste avec un des matériaux du système actif en question.

La figure 1 représente, de manière schématique, un tel vitrage électrochrome à structure feuilletée et montée en double-vitrage : il comporte un substrat en verre 1 associé à un second substrat en verre 2 par l'intermédiaire d'une feuille d'intercalaire d'assemblage en PVB 5. Entre ce substrat 2 et le substrat 3, se trouve le système électrochrome 4, c'est-à-dire une première couche électroconductrice d'un oxyde d'indium dopé à l'étain ITO ou un oxyde d'étain dopé au fluor SnO₂.F, puis une couche électrochrome cathodique comme WO₃, puis une couche d'électrolyte en matériau conducteur protonique polymère tel qu'une solution de H₃PO₄ dans du polyoxyéthylène POE. (Il peut aussi bien s'agir d'un vitrage électrochrome fonctionnant par insertion réversible d'ions Li⁺, avec un matériau polymère conducteur de lithium du type polyéthylèneimine et sel de lithium).

Sur l'électrolyte est disposée une couche de matériau électrochrome anodique en oxyde de nickel ou d'iridium hydraté, puis une couche électroconductrice du type ITO ou SnO₂:F.

L'ensemble verre 1, verre 2, verre 3 est ensuite monté, optionnellement, en double-vitrage à l'aide d'un verre 10 par l'intermédiaire d'une lame de gaz 13. Pour plus de détails sur une telle structure, et notamment tout le système de connectique, on se rapportera avantageusement au brevet EP-0 575 207 : il utilise des clinquants métalliques 9 et des bandes conductrices sérigraphiées 11, 12 autorisant une alimentation électrique par la face externe du substrat de verre 1.

On peut évidemment également utiliser le vitrage ne comprenant que les verres 1, 2, 3, en vitrage feuilleté 14, ou même que des verres 2 et 3. (Dans cette dernière configuration, les verres 2 et 3 sont choisis, de préférence, de même taille).

Dans le cas le plus complexe représenté à la figure 1, le joint selon l'invention est le joint 6. D'autres joints 7, 8 viennent le compléter lors du montage de la structure bi-verre 2, 3 avec le verre 1 par feuilletage avec la feuille de PVB 5, ces joints étant à base de polysulfure.

En conclusion, l'invention a mis au point de nouvelles compositions de joints particulièrement avantageuses à utiliser pour des vitrages munis de matériaux assez sensibles à la dégradation tels que des matériaux de conduction électrique, de conduction ionique, des matériaux qui sont le siège de réactions réversibles chimiques/électrochimiques, ou de matériaux changeant de phase avec la température du type thermochrome.

L'intérêt de ces joints est qu'ils remplissent efficacement leur rôle d'étanchéification, mais qu'en outre leur propriété d'isolant électrique et/ou leur grande inertie chimique leur permettent de ne pas « interférer » du tout avec ces matériaux, d'où une plus grande durabilité de ce type de vitrage et, surtout, une grande reproductibilité dans leur durée de vie. Par ailleurs, le choix des constituants du joint permet avantageusement de moduler ses propriétés mécaniques, sa viscosité à froid et à chaud, ce qui autorise une mise en oeuvre simple et automatisée, par extrusion par exemple de manière à s'adapter aisément à la fabrication de tout type de vitrage actif : dans le cas de vitrages électrochromes, il peut être employé que l'électrolyte soit « tout solide » ou soit à base de polymère, et, dans ce dernier cas, que l'électrolyte soit déposé sous la forme d'un film ou par une technique de coulée.

## Revendications

1. Vitrage comprenant au moins deux substrats rigides ou semi-rigides transparents du type verre sur lequel ou entre lesquels est disposé au moins un système thermiquement, électriquement et/ou électrochimiquement actif **caractérisé en ce qu**'il est muni d'au moins un joint d'étanchéité (6) en contact avec au moins un des matériaux électriquement ou électrochimiquement actifs dudit système, ledit joint contenant une matrice polymère à base d'élastomère(s) (A), choisi(s) parmi les élastomères suivants : l'éthylène-propylène, l'éthylène-vinylacétate EVA, l'éthylène-vinylbutyrate EVB, le poly-propylène, le polyéthylène, l'éthylène-propylène-butène, le polyméthyl-pentène.

2. Vitrage selon la revendication 1, **caractérisé en ce que** la matrice polymère du joint (6) contient une pluralité d'élastomères (A) présentant des masses molaires différentes.

3. Vitrage selon la revendication 2, **caractérisé en ce que** la matrice du polymère contient au moins trois élastomères (A) de masses molaires différentes.

4. Vitrage selon la revendication 2 ou la revendication 3, **caractérisé en ce que** les masses molaires des élastomères sont supérieures ou égales à 20.000, et de préférence comprises entre 3.10⁴ et 2.10⁶.

5. Vitrage selon l'une des revendications précédentes, **caractérisé en ce que** la matrice polymère du joint (6) contient également au moins un agent plastifiant (B), de masse molaire inférieure ou égale à 20.000.

6. Vitrage selon l'une des revendications précédentes, **caractérisé en ce que** la matrice polymère contient également au moins un agent collant (C), de masse molaire inférieure ou égale à 10.000 et/ou de point de ramollissement entre 50 et 130°C.

7. Vitrage selon la revendication 6, **caractérisé en ce que** l'agent collant (C) est une résine aliphatique hydrocarbonée saturée.

8. Vitrage selon l'une des revendications précédentes, **caractérisé en ce que** le joint (6) comporte également en dispersion dans la matrice polymère au moins une charge (D), isolante électriquement, de préférence minérale et sous forme solide, du type poudre.

9. Vitrage selon l'une des revendications précédentes, **caractérisé en ce que** le joint (6) comprend, en pourcentages pondéraux, de 20 à 90% en poids d'élastomère(s) (A), 15 à 30% d'agent(s) plastifiant(s) (B), 0 à 25% d'agent(s) collant(s) (C), 0 à 30% de charge(s) (D).

10. Vitrage selon l'une des revendications précédentes, **caractérisé en ce que** le joint d'étanchéité (6) est en contact avec au moins un des matériaux électriquement ou électrochimiquement actifs dudit système **et en ce qu**'il présente une conductivité électrique inférieure à 10⁻⁴ ohm⁻¹ .cm⁻¹, notamment inférieure à 10⁻⁵ ohm .cm⁻¹ et même 10⁻⁷ omh⁻¹ .cm⁻¹.

11. Vitrage selon l'une des revendications précédentes, **caractérisé en ce que** le joint (6) contient très peu ou pas de particules conductrices ou semiconductrices et/ou très peu ou pas de fonctions chimiques du type liaison insaturée, liaison aromatique du type phénol, fonctions soufrées du type thiol.

12. Vitrage selon l'une des revendications précédentes, **caractérisé en ce que** le système électriquement ou électrochimiquement actif est un système chauffant du type réseau de fils conducteurs ou couche continue conductrice en métal ou oxyde métallique dopé, ou un système à transmission/absorption lumineuse ou énergétique variable du type système électrochrome (11) ou viologène, ou un système à diffusion lumineuse variable du type système à valve optique à particules suspendues ou à cristaux liquides, ou un système photovoltaïque.

13. Vitrage selon l'une des revendications précédentes, **caractérisé en ce que** le système électrochimiquement actif est un système électrochrome "tout solide".

14. Vitrage selon l'une des revendications précédentes, **caractérisé en ce que** le joint (6) est extrudé.

15. Vitrage selon l'une des revendications précédentes, **caractérisé en ce qu'**on associe au joint d'étanchéité (6), notamment en contact avec au moins une des couches électriquement ou électrochimiquement actives du système au moins un autre joint "complémentaire" (7,8) apte à compléter sa fonction d'étanchéité, notamment vis-à-vis de l'eau liquide, par exemple un second joint de type polysulfure, polyuréthane ou silicone.

16. Vitrage selon l'une des revendications précédentes, **caractérisé en ce qu'**il comporte une structure feuilletée, le vitrage présentant une gorge périphérique dans laquelle est disposé le joint (6) de façon affleurante.

17. Vitrage selon l'une des revendications précédentes, **caractérisé** en ce **qu**'il comporte une structure feuilletée comprenant trois substrats rigides, avec entre le premier (1) et le second substrat (2) une feuille intercalaire (5) d'assemblage thermoplastique du type PVB ou EVA, et entre le second (2) et le troisième substrat (3) un système électrochrome (4), les dimensions respectives des trois substrats étant telles que le vitrage présente une gorge périphérique dans laquelle est (sont) disposé(s) le(s) joint(s) d'étanchéité (6, 7, 8), de façon affleurante ou débordante.

18. Vitrage selon l'une des revendications précédentes, **caractérisé en ce qu**'il comporte la structure feuilletée qui est montée en vitrage isolant multiple, notamment en double vitrage par association avec un autre substrat rigide (10) par l'intermédiaire d'une lame de gaz intercalaire (13).

## Patentansprüche

1. Verglasung, die wenigstens zwei starre bzw. halbstarre transparente Substrate aus Glas umfasst, auf welchem oder zwischen welche mindestens ein thermisch, elektrisch und/oder elektrochemisch aktives System angeordnet ist, **dadurch gekennzeichnet, dass** sie mit wenigstens einer Dichtung (6) versehen ist, die sich mit mindestens einem der elektrisch oder elektrochemisch aktiven Materialien dieses Systems in Berührung befindet und eine polymere Matrix auf der Basis von (einem) Elastomer(en) (A) enthält, das (die) aus den Elastomeren Ethylen-Propylen, Ethylen-Vinylacetat, EVA, Ethylen-Vinylbutyrat, EVB, Polypropylen, Polyethylen, Ethylen-Propylen-Buten und Polymethylpenten ausgewählt ist (sind).

2. Verglasung nach Anspruch 1, **dadurch gekennzeichnet, dass** die polymere Matrix der Dichtung (6) eine Vielzahl von Elastomeren (A) enthält, die unterschiedliche Molmassen besitzen.

3. Verglasung nach Anspruch 2, **dadurch gekennzeichnet, dass** die Matrix des Polymers mindestens drei Elastomere (A) mit unterschiedlichen Molmassen enthält.

4. Verglasung nach Anspruch 2 oder 3, **dadurch gekennzeichnet, dass** die Molmassen der Elastomeren mindestens 20 000 und vorzugsweise 3·10⁴ bis 2·10⁶ betragen.

5. Verglasung nach einem der vorhergehenden Ansprüche, **dadurch gekennzeichnet, dass** die polymere Matrix der Dichtung (6) auch mindestens einen Weichmacher (B) mit einer Molmasse von kleiner als oder gleich 20 000 enthält.

6. Verglasung nach einem der vorhergehenden Ansprüche, **dadurch gekennzeichnet, dass** die polymere Matrix ebenfalls mindestens ein klebrigmachendes Mittel (C) mit einer Molmasse von kleiner als oder gleich 10 000 und/oder einem Erweichungspunkt von zwischen 50 und 130 °C enthält.

7. Verglasung nach Anspruch 6, **dadurch gekennzeichnet, dass** das klebrigmachende Mittel (C) ein gesättigtes aliphatisches Kohlenwasserstoffharz ist.

8. Verglasung nach einem der vorhergehenden Ansprüche, **dadurch gekennzeichnet, dass** die Dichtung (6) weiterhin mindestens einen elektrisch isolierenden Füllstoff (D), der vorzugsweise anorganisch ist und pulvrig in fester Form vorliegt, in der polymeren Matrix dispergiert enthält.

9. Verglasung nach einem der vorhergehenden Ansprüche, **dadurch gekennzeichnet, dass** die Dichtung (6) 20 bis 90 Gew.-% Elastomer(e) (A), 15 bis 30 Gew.-% Weichmacher (B), 0 bis 25 Gew.-% Klebrigmachendes Mittel (C) und 0 bis 30 Gew.-% Füllstoff(e) (D) umfasst.

10. Verglasung nach einem der vorhergehenden Ansprüche, **dadurch gekennzeichnet, dass** die Dichtung (6) sich mit mindestens einem der elektrisch bzw. elektrochemisch aktiven Materialien des Systems in Berührung befindet, und dass sie eine elektrische Leitfähigkeit von weniger als 10⁻⁴ Ohm⁻¹·cm⁻¹, insbesondere von weniger als 10⁻⁵ Ohm⁻¹·cm⁻¹ und sogar 10⁻⁷ Ohm⁻¹·cm⁻¹ aufweist.

11. Verglasung nach einem der vorhergehenden Ansprüche, **dadurch gekennzeichnet, dass** die Dichtung (6) sehr wenige oder keine leitenden bzw. halbleitenden Teilchen und/oder sehr wenige bzw. keine chemischen Funktionen vom Typ ungesättigte Bindung, aromatische Bindung vom Typ Phenol und funktionelle Schwefelgruppen vom Typ Thiol enthält.

12. Verglasung nach einem der vorhergehenden Ansprüche, **dadurch gekennzeichnet, dass** das elektrisch bzw. elektrochemisch aktive System ein Heizsystem vom Typ eines Netzes aus leitfähigen Drähten oder einer ununterbrochenen leitfähigen Schicht aus Metall bzw. dotiertem Metalloxid, ein System mit veränderlicher Transmission/Absorption für Wärmestrahlung oder Licht vom Typ eines elektrochromen bzw. Viologensystems (11), ein System mit veränderlicher Lichtstreuung vom Typ eines Lichtschaltersystems mit suspendierten Teilchen bzw. Flüssigkristallen oder ein Photovoltaiksystem ist.

13. Verglasung nach einem der vorhergehenden Ansprüche, **dadurch gekennzeichnet, dass** das elektrochemisch aktive System ein "vollständig festes" elektrochromes System ist.

14. Verglasung nach einem der vorhergehenden Ansprüche, **dadurch gekennzeichnet, dass** die Dichtung (6) extrudiert ist.

15. Verglasung nach einem der vorhergehenden Ansprüche, **dadurch gekennzeichnet, dass** die Dichtung (6), die sich insbesondere mit mindestens einer der elektrisch bzw. elektrochemisch aktiven Schichten des Systems in Kontakt befindet, mit wenigstens einer anderen komplementären Dichtung (7, 8), die in der Lage ist, ihre Abdichtungsfunktion, insbesondere gegen flüssiges Wasser, zu ergänzen, beispielsweise einer zweiten Dichtung aus Polysulfid, Polyurethan oder Silicon, verbunden wird.

16. Verglasung nach einem der vorhergehenden Ansprüche, **dadurch gekennzeichnet, dass** sie einen Verbundaufbau umfasst, wobei die Verglasung eine Umfangsnut aufweist, in welcher die Dichtung (6) bündig abschließend angeordnet ist.

17. Verglasung nach einem der vorhergehenden Ansprüche, **dadurch gekennzeichnet, dass** sie einen Verbundaufbau umfasst, der drei starre Substrate umfasst, wobei sich zwischen erstem (1) und zweitem Substrat (2) eine verbindende thermoplastische Zwischenfolie (5) vom Typ PVB bzw. EVA und zwischen zweitem (2) und drittem Substrat (3) ein elektrochromes System (4) befindet und die jeweiligen Abmessungen der drei Substrate derart sind, dass die Verglasung eine Umfangsnut aufweist, in welcher die Dichtung(en) (6, 7, 8) bündig abschließend oder überstehend angeordnet ist (sind).

18. Verglasung nach einem der vorhergehenden Ansprüche, **dadurch gekennzeichnet, dass** sie den Verbundaufbau umfasst, der zu einem mehrfachen Isolierglas, insbesondere einer Doppelverglasung, durch Verbindung mit einem anderen starren Substrat (10) über eine Gasfüllung (13) zusammengebaut ist.

## Claims

1. Glazing panel comprising at least two transparent rigid or semirigid substrates of the glass type on which or between which there is disposed at least one thermally, electrically and/or electrochemically active system, **characterised in that** it is provided with at least one sealing joint (6) in contact with at least one of the electrically or electrochemically active materials of the said system, the said joint containing a polymer matrix based on elastomer or elastomers (A), chosen from amongst the following elastomers: ethylene-propylene, ethylene-vinylacetate EVA, ethylene-vinylbutyrate EVB, polypropylene, polyethylene, ethylene-propylene-butene or polymethyl-pentene.

2. Glazing panel according to Claim 1, **characterised in that** the polymer matrix of the joint (6) contains a plurality of elastomers (A) having different molar masses.

3. Glazing panel according to Claim 2, **characterised in that** the matrix of the polymer contains at least three elastomers (A) with different molar masses.

4. Glazing panel according to Claim 2 or Claim 3, **characterised in that** the molar masses of the elastomers are greater than or equal to 20,000, and preferably between 3.10⁴ and 2.10⁶.

5. Glazing panel according to one of the preceding claims, **characterised in that** the polymer matrix of the joint (6) also contains at least one plasticiser (B) with a molar mass less than or equal to 20,000.

6. Glazing panel according to one of the preceding claims, **characterised in that** the polymer matrix also contains at least one adhesive agent (C), with a molar mass less than or equal to 10,000 and/or with a melting point between 50 and 130°C.

7. Glazing panel according to Claim 6, **characterised in that** the adhesive agent (C) is a saturated hydrocarbon aliphatic resin.

8. Glazing panel according to one of the preceding claims, **characterised in that** the joint (6) also has, in dispersion in the polymer matrix, at least one electrically insulating filler (D), preferably a mineral and in solid form, of the powder type.

9. Glazing panel according to one of the preceding claims, **characterised in that** the joint (6) comprises, in percentages by weight, from 20% to 90% by weight elastomer or elastomers (A), 15% to 30% plasticiser or plasticisers (B), 0% to 25% adhesive agent or agents (C), 0% to 30% filler or fillers (D).

10. Glazing panel according to one of the preceding claims, **characterised in that** the sealing joint (6) is in contact with at least one of the electrically or electrochemically active materials of the said system and **in that** it has an electrical conductivity less than 10⁻⁴ ohm⁻¹ .cm⁻¹, in particular less than 10⁻⁵ ohm.cm⁻¹ and even 10⁻⁷ ohm⁻¹ .cm⁻¹.

11. Glazing panel according to one of the preceding claims, **characterised in that** the joint (6) contains very little or no conductive or semiconductive particles and/or very few or no chemical functions of the unsaturated bond type, aromatic bond of the phenol type, or sulphurated functions of the thiol type.

12. Glazing panel according to one of the preceding claims, **characterised in that** the electrically or electrochemically active system is a heating system of the type consisting of a network of conductive wires or a continuous conductive layer of metal or doped metallic oxide, or a system with variable light or energy transmission/absorption of the electrochromic (11) or viologenic system type, or a variable light diffusion system of the optical valve system type with suspended particles or liquid crystals, or a photovoltaic system.

13. Glazing panel according to one of the preceding claims, **characterised in that** the electrochemically active system is an "all solid" electrochromic system.

14. Glazing panel according to one of the preceding claims, **characterised in that** the joint (6) is extruded.

15. Glazing panel according to one of the preceding claims, **characterised in that** there is associated with the sealing joint (6), in particular in contact with at least one of the electrically or electrochemically active layers of the system, at least one other "complementary" joint (7, 8) able to supplement its sealing function, in particular vis-a-vis liquid water, for example a second joint of the polysulphide, polyurethane or silicone type.

16. Glazing panel according to one of the preceding claims, **characterised in that** it has a laminated structure, the glazing having a peripheral groove in which the joint (6) is disposed in a flush fashion.

17. Glazing panel according to one of the preceding claims, **characterised in that** it has a laminated structure comprising three rigid substrates with, between the first (1) and the second substrate (2), an intermediate thermoplastic assembly sheet (5) of the PVB or EVA type and, between the second (2) and third substrate (3), an electrochromic system (4), the respective dimensions of the three substrates being such that the glazing panel has a peripheral groove in which the sealing joint or joints (6, 7, 8) are disposed, so as to be flush or projecting.

18. Glazing panel according to one of the preceding claims, **characterised in that** it comprises the laminated structure which is mounted as multiple insulating glazing, in particular in double glazing by association with another rigid substrate (10) by means of an intermediate layer of gas (13).
